# EUROPÄISCHE PATENTSCHRIFT

(11) **EP 3 066 008 B1**
(45) Veröffentlichungstag und Bekanntmachung des Hinweises auf die Patenterteilung: **03.01.2018**
(21) Anmeldenummer: 14793851.8
(22) Anmeldetag: 06.11.2014
(51) Int. Cl.: B64D 11/06

(54) **FLUGZEUGSITZVORRICHTUNG**
AIRCRAFT SEAT DEVICE
DISPOSITIF SIÈGE D'AVION

(30) Priorität: 08.11.2013 DE 102013112336
(43) Veröffentlichungstag der Anmeldung: 14.09.2016
(73) Patentinhaber: Recaro Aircraft Seating GmbH & Co. KG, 74523 Schwäbisch Hall (DE)
(72) Erfinder: HELWIG, Daniel, 74523 Schwäbisch Hall (DE); HOFFMANN, Hermann, 74523 Schwäbisch Hall (DE); PURFÜRST, Jörg, 74523 Schwäbisch Hall (DE); ITZINGER, Andreas, 74545 Michelfeld (DE); KNAUP, Sascha, 33154 Salzkotten (DE)
(74) Vertreter: Daub, Thomas
(86) Internationale Anmeldenummer: PCT/EP2014/073855
(87) Internationale Veröffentlichungsnummer: WO 2015/067674

(56) Entgegenhaltungen:
- WO-A1-2011/100807
- WO-A2-2012/131384
- US-A1- 2007 145 216
- US-A1- 2012 167 807

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit zumindest einer Tischvorrichtung, die zumindest eine Tischplatte umfasst, und mit zumindest einer Verstellvorrichtung, die dazu vorgesehen ist, die Tischplatte zwischen einer Verstaustellung und einer Gebrauchsstellung zu verstellen, vorgeschlagen worden.

Aus der Druckschrift WO 2012/131384 A2 ist eine Flugzeugsitzvorrichtung bekannt, die eine Tischplatte umfasst, welche durch eine Verstellvorrichtung aus einer Verstaustellung in eine Gebrauchsstellung bewegt werden kann.

Ferner ist aus der Druckschrift US 2007/0145216 A1 eine Flugzeugsitzvorrichtung mit einem multifunktionalen Tisch an einer Armlehne bekannt, welcher durch eine Verstellvorrichtung in einer Gebrauchsstellung verstellt werden kann. Dokument WO2011/100807 offenbart eine verstellbare Tischplatte, die zwei unterschiedliche Drehgelenke aufweist. Die Aufgabe der Erfindung besteht insbesondere darin, eine gattungsgemäße Vorrichtung mit verbesserten Eigenschaften hinsichtlich Raumausnutzung und einfacher Benutzung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung gemäß Anspruch 1. Die Flugzeugsitzvorrichtung weist eine Tischvorrichtung auf, die zumindest eine Tischplatte umfasst, und mit zumindest einer Verstellvorrichtung, die dazu vorgesehen ist, die Tischplatte zwischen einer Verstaustellung und einer Gebrauchsstellung zu verstellen.

Es wird vorgeschlagen, dass die Verstellvorrichtung dazu vorgesehen ist, die Tischplatte bei einer Verstellung zwischen der Verstaustellung und der Gebrauchsstellung in einer linearen Verschiebebewegung und einer Rotationsbewegung zumindest im Wesentlichen in einer Ebene zu bewegen. Unter einer "Tischvorrichtung" soll dabei insbesondere eine Vorrichtung verstanden werden, die zumindest eine Tischplatte aufweist, die eine Tischauflagefläche ausbildet, auf die ein Benutzer, insbesondere ein Fluggast, in zumindest einem Betriebszustand Gegenstände ablegen kann. Dabei ist die Tischplatte der Tischvorrichtung vorzugsweise in verschiedenen Stellungen verstellbar. Grundsätzlich ist es auch denkbar, dass die Tischvorrichtung eine Tischplatte aufweist, die aus zumindest zwei schwenkbar zueinander angeordneten Teilen gebildet ist. Grundsätzlich ist es auch denkbar, dass die Tischvorrichtung eine Haupttischplatte und eine an die Haupttischplatte anbindbare Nebentischplatte aufweist, die beispielsweise über ein Scharnier schwenkbar oder über eine Steckverbindung fest mit der Haupttischplatte gekoppelt sein kann, um eine Tischauflagefläche der Tischvorrichtung zu vergrößern. Unter einer "Verstellvorrichtung" soll dabei insbesondere eine Vorrichtung verstanden werden, die dazu vorgesehen ist, die Tischplatte beweglich zu lagern, so dass diese zwischen verschiedenen Stellungen verstellbar ist. Unter einer "Verstaustellung" soll dabei insbesondere eine Stellung der Tischplatte verstanden werden, in der die Tischplatte nicht dazu vorgesehen ist, zur Ablage von Gegenständen benutzt zu werden. Dabei ist die Tischplatte in der Verstaustellung vorzugsweise in einem Gehäuse eingefahren, sodass es von einem Bewegungsbereich einer Person, die auf einem zugeordneten Flugzeugsitz sitzt, entfernt ist. Dabei ist die Tischplatte in der Verstaustellung vorzugsweise komplett in einem Gehäuse angeordnet, wobei eine Seite der Tischplatte das Gehäuse vorzugsweise abschließt. Unter einer "Gebrauchsstellung" soll dabei insbesondere eine Stellung der Tischplatte verstanden werden, in der die Tischplatte dazu vorgesehen ist, zur Ablage von Gegenständen benutzt zu werden. Dazu ist die Tischplatte in der Gebrauchsstellung in einem Bereich vor einen zugeordneten Flugzeugsitz positioniert, sodass eine Person, die in dem Flugzeugsitz sitzt, die Tischplatte problemlos und ergonomisch vorteilhaft erreichen kann. Dabei ist es denkbar, dass die Tischplatte mehrere Gebrauchsstellungen aufweist, in denen die Tischplatte mehr oder weniger aus ihrer Verstaustellung herausgefahren ist, sodass die Tischplatte in verschiedenen Positionen und Abständen zu dem zugeordneten Flugzeugsitz anordenbar ist. Dabei ist die Tischplatte in den verschiedenen Gebrauchsstellungen vorzugsweise jeweils arretierbar. Unter "verstellen" soll dabei verstanden werden, dass die Tischplatte durch eine auf sie einwirkende Kraft zwischen verschiedenen Stellungen, wie insbesondere der Verstaustellung oder einer Gebrauchsstellung, bewegt wird. Die einwirkende Kraft wird dabei vorzugsweise von einer Person direkt auf die Tischplatte übertragen, beispielsweise durch Ziehen an der Tischplatte. Grundsätzlich ist es auch denkbar, dass die auf die Tischplatte einwirkende Kraft indirekt von einer Person auf die Tischplatte übertragen wird, beispielsweise über eine Hebelvorrichtung, dass die auf die Tischplatte einwirkende Kraft von einer vorgespannten Feder auf die Tischplatte übertragen wird, oder dass die auf die Tischplatte einwirkende Kraft von einer Motoreinheit, wie beispielsweise von einem Elektromotor, erzeugt und über ein Getriebe an die Tischeinheit übertragen wird. Unter einer "linearen Verschiebebewegung" soll dabei insbesondere eine Bewegung des Tischs entlang einer Verschiebeachse verstanden werden. Unter einer "Rotationsbewegung" soll dabei eine Bewegung des Tischs um eine Rotationsachse verstanden werden. Unter "in einer Ebene zu bewegen" soll dabei insbesondere verstanden werden, dass sich die Tischplatte bei der linearen Verschiebebewegung und der Rotationsbewegung in einer Ebene befindet und sich nicht aus dieser Ebene herausbewegt. Dabei weist die Tischplatte, also eine Oberfläche des Tischs, immer eine gleiche Neigung zu einer Aufständerebene auf, auf der die Flugzeugsitzvorrichtung aufgeständert ist. Dabei stehen eine Verschiebeachse, in der der Tisch in der linearen Verschiebebewegung bewegt wird, und eine Rotationsachse, um die die Tischplatte in der Rotationsbewegung drehbar ist, orthogonal aufeinander. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "zumindest im Wesentlichen in einer Ebene" soll dabei insbesondere eine Abweichung von einer Ebene von weniger als 15 Grad, vorzugsweise von weniger als 10 Grad und in einer besonders vorteilhaften Ausgestaltung von weniger als 5 Grad verstanden werden. Dadurch, dass die Tischplatte der Tischvorrichtung bei ihrer linearen Verschiebebewegung und der Rotationsbewegung immer in einer Ebene bewegt wird, kann eine besonders vorteilhafte Verstellbewegung der Tischplatte erreicht werden. Durch eine erfindungsgemäße Ausgestaltung kann eine Flugzeugsitzvorrichtung mit einer besonders vorteilhaften Tischvorrichtung bereitgestellt werden, die insbesondere sehr variabel für verschiedene Flugzeugsitzvarianten einsetzbar ist und dabei besonders platzsparend in die Flugzeugsitzvorrichtung integrierbar ist. Insbesondere kann durch die erfindungsgemäße Ausgestaltung einfach eine einzige Tischplatte bereitgestellt werden, die eine besonders vorteilhaft große Tischauflagefläche aufweist, die insbesondere ohne zusätzlich aufklappbare Tischelemente erreicht werden kann.

Weiter wird vorgeschlagen, dass die lineare Verschiebebewegung und die Rotationsbewegung zumindest teilweise unabhängig voneinander sind. Darunter, dass die "Verschiebebewegung und die Rotationsbewegung zumindest teilweise unabhängig voneinander sind", soll dabei insbesondere verstanden werden, dass zumindest in einem Teilbereich einer Verstellbewegung eine lineare Verschiebebewegung ausführbar ist, ohne dass zwangsläufig eine Rotationsbewegung der Tischplatte erzeugt wird, oder umgekehrt. Dadurch kann die Tischplatte besonders vorteilhaft zwischen der Verstaustellung und der Gebrauchsstellung verstellt werden.

Zudem wird vorgeschlagen, dass die lineare Verschiebebewegung und die Rotationsbewegung zumindest teilweise aufeinanderfolgend ausgebildet sind. Darunter, dass die "Verschiebebewegung und die Rotationsbewegung zumindest teilweise aufeinanderfolgend ausgebildet sind", soll dabei insbesondere verstanden werden, dass zu zumindest einem Zeitpunkt einer Verstellung der Tischplatte die Tischplatte lediglich in der linearen Verschiebebewegung und zu zumindest einem Zeitpunkt einer Verstellung der Tischplatte die Tischplatte lediglich in der Rotationsbewegung bewegt wird. Dabei ist es denkbar, dass zu zumindest einem Zeitpunkt einer Verstellung der Tischplatte die Tischplatte in einer von der linearen Verschiebebewegung und der Rotationsbewegung überlagerten Verstellbewegung bewegt wird. Dadurch kann eine Verstellbewegung, in der die Tischplatte verstellt wird, besonders vorteilhaft ausgebildet werden.

Die Verstellvorrichtung umfasst zur Ausführung der Rotationsbewegung zumindest zwei Drehgelenke, die unterschiedliche Rotationsachsen ausbilden. Unter einem "Drehgelenk" soll dabei insbesondere ein Gelenk verstanden werden, das wenigstens zwei Anbindungselemente aufweist, die um eine Rotationsachse zueinander drehbar miteinander verbunden sind. Unter einer "Rotationsachse" soll dabei insbesondere eine Gerade verstanden werden, um die eine Rotation eines Körpers, wie insbesondere eine Rotation der Tischplatte, erfolgt oder erfolgen kann. Darunter, dass die "Drehgelenke unterschiedliche Rotationsachsen ausbilden", soll dabei insbesondere verstanden werden, dass die beiden Rotationsachsen beabstandet zueinander angeordnet sind. Dabei sind die Rotationsachsen der zumindest zwei Drehgelenke vorzugsweise parallel zueinander ausgerichtet. Dadurch kann die Verstellvorrichtung besonders einfach ausgebildet werden.

Zudem wird vorgeschlagen, dass das erste Drehgelenk und das zweite Drehgelenk unterhalb einer Tischauflagefläche angeordnet und mit der Tischplatte verbunden sind. Darunter, dass die "Drehgelenke unterhalb einer Tischauflagefläche angeordnet sind", soll dabei insbesondere verstanden werden, dass die Drehgelenke, von der Tischauflagefläche gesehen, auf der gegenüberliegenden Unterseite angeordnet sind, die in einem montierten Zustand einer Aufständerebene zugewandt ist, auf der die Flugzeugsitzvorrichtung aufgeständert ist. Dabei sind die Drehgelenke vorzugsweise auf der Unterseite der Tischplatte angeordnet, grundsätzlich ist es aber auch denkbar, dass zumindest eines der Drehgelenke seitlich in einer Ausnehmung in der Tischplatte eingebracht ist. Unter einer "Tischauflagefläche" soll dabei eine Fläche verstanden werden, die dazu vorgesehen ist, dass auf ihr Gegenstände abgelegt werden können, wobei die Tischauflagefläche in einem in einem Flugzeug montierten Zustand von einer Aufständerebene weggerichtet ist, auf der die Flugzeugsitzvorrichtung aufgeständert ist. Dadurch können die Drehgelenke besonders vorteilhaft an die Tischplatte angebunden werden und sind insbesondere in einem Bereich der Tischauflagefläche nicht störend. Außerdem kann durch die beiden Drehgelenke und deren Anordnung eine besonders gute Stabilität und eine besonders vorteilhafte Krafteinleitung in das Sitzelement erreicht werden.

Ferner wird vorgeschlagen, dass die beiden mit der Tischplatte verbundenen Drehgelenke an einem hinteren Ende der Tischplatte angeordnet sind. Unter einem "hinteren Ende der Tischplatte" soll dabei insbesondere ein Ende der Tischplatte verstanden werden, das in der Gebrauchsstellung einem Passagier bzw. dem Flugzeugsitz, dem die Tischvorrichtung zugeordnet ist, abgewandt ist. Dadurch kann eine besonders vorteilhafte Ausgestaltung der Verstellvorrichtung erreicht werden.

Es wird weiterhin vorgeschlagen, dass die Verstellvorrichtung zur Ausführung der linearen Verschiebebewegung zumindest zwei Linearführungen aufweist. Unter einer "Linearführung" soll dabei insbesondere eine Führung verstanden werden, die zwei Elemente in einer linearen Verschiebebewegung entlang einer Verschiebeachse zueinander lagert. Dabei weist die Linearführung ein erstes Führungselement, wie vorzugsweise ein Schienenelement auf, das fest mit einem ersten Element verbunden ist, sowie ein zweites Führungselement, das vorzugsweise ebenfalls als ein Schienenelement ausgebildet ist und in das erste Führungselement eingreift und in diesem gleiten kann. Grundsätzlich ist es auch denkbar, dass das eine der beiden Führungselemente ein oder mehrere Wälzlager aufweist, über die das eine Führungselement zu dem anderen Führungselement verschiebbar ist. Darunter, dass die Verstellvorrichtung zumindest zwei Linearführungen aufweist", soll insbesondere verstanden werden, dass die Verstellvorrichtung in einer besonders vorteilhaften Ausgestaltung zwei Linearführungen aufweist, aber es durchaus auch denkbar ist, dass die Verstellvorrichtung zur Verstellung der Tischplatte mehrere Linearführungen umfasst, die wahlweise in einer gleichen Verschiebeachse verschiebbar sind oder unterschiedliche Verschiebeachsen aufweisen. Vorzugsweise wird eine Reibung zwischen den zwei zueinander verschiebbaren Führungselementen durch eine Beschichtung, wie insbesondere durch eine Gleitflockbeschichtung, auf einen gewünschten Wert eingestellt, wodurch besonders vorteilhaft eine definierte Kraft eingestellt werden kann, die nötig ist, um die Führungselemente gegeneinander zu verschieben. Dadurch kann die Verstellvorrichtung zur Ausführung der Verschiebebewegung besonders vorteilhaft und stabil ausgebildet werden.

Ferner wird vorgeschlagen, dass die zumindest zwei Linearführungen als Gleitführungen ausgebildet sind. Darunter, dass eine "Linearführung als eine Gleitführung ausgebildet ist", soll insbesondere verstanden werden, dass zwei Führungselemente der Linearführung über eine Gleitlagerung miteinander gekoppelt sind. Dadurch können die Führungselemente besonders einfach und vorteilhaft ausgebildet werden.

Weiter wird vorgeschlagen, dass die zumindest zwei Linearführungen zueinander verschwenkbar angeordnet sind. Darunter, dass die "Linearführungen schwenkbar zueinander angeordnet sind", soll insbesondere verstanden werden, dass die Verschiebeachse von zumindest einer der Linearführungen zumindest in einem Betriebszustand schwenkbar zu der Verschiebeachse der anderen Linearführung ausgebildet ist. Dabei weichen die Verschiebeachsen der beiden Linearführungen in einem verschwenkten Zustand von ihrer Parallelität ab, liegen aber immer noch in derselben Ebene. Dadurch kann die Tischplatte bei der Verstellung besonders vorteilhaft verstellt werden und vorteilhaft zu dem zugeordneten Flugzeugsitz positioniert werden.

Außerdem wird vorgeschlagen, dass die Flugzeugsitzvorrichtung eine Konsole aufweist, die zumindest eine Aufnahme für die Tischvorrichtung umfasst, in der die erste Linearführung fest angebunden ist. Unter einer "Konsole" soll dabei insbesondere ein Element einer Flugzeugsitzvorrichtung oder eines Sitzbereichs verstanden werden, das zur Aufnahme oder Befestigung von Anbauteilen, die dem Flugzeugsitz oder dem Sitzbereich zugeordnet sind, vorgesehen ist, wie beispielsweise zur Anbringung eines Bildschirms oder zur Anbringung von Ablage- und/oder Abstützelementen, wie Tischen oder Beinablagen. Dabei spannt die Konsole vorzugsweise einen Raum auf, der von einem Passagier nicht einsehbar ist. Unter einer "Aufnahme" soll dabei insbesondere ein Element verstanden werden, das dazu vorgesehen ist, ein anderes Element, wie insbesondere die Tischvorrichtung, aufzunehmen. Dabei ist die Aufnahme vorzugsweise von einer Ausnehmung gebildet, die zumindest in zwei Richtungen, vorteilhaft in zumindest drei Richtungen und in einer besonders vorteilhaften Ausgestaltung zu fünf Richtungen hin geschlossen oder zumindest von außen nicht einsehbar ist. Dabei weist die Aufnahme zumindest eine Öffnung auf, über die zumindest die Tischplatte in einen Bereich außerhalb der Aufnahme bewegt werden kann. In der Verstaustellung ist die gesamte Tischvorrichtung mit der Tischplatte und der Verstellvorrichtung in der Aufnahme angeordnet, wobei eine Seitenfläche der Tischplatte die Aufnahme in der Verstaustellung vorzugsweise verschließt. Grundsätzlich ist es auch denkbar, dass die Tischplatte in der Verstaustellung teilweise aus der Aufnahme herausragt. Ein Teil der Tischplatte, der dabei in der Verstaustellung aus der Aufnahme herausragt, könnte dabei beispielsweise eine Aufnahme zur Aufnahme von Getränkegefäßen aufweisen oder als ein Griffelement ausgebildet sein, über das die Tischplatte von einem Benutzer einfach ergriffen und verstellt werden kann. Dabei weist die Konsole in einem Bereich der Aufnahme vorzugsweise eine Schutzbeschichtung auf, die die Konsole vor Beschädigungen, wie insbesondere Kratzern, schützt. Dabei ist die Schutzbeschichtung insbesondere dazu vorgesehen, eine Oberfläche der Konsole vor Beschädigungen zu schützen, die beispielsweise durch unsachgemäße Verstellung der Tischplatte entstehen können. Grundsätzlich ist es aber auch denkbar, dass die Aufnahme eine verschwenkbare Klappe aufweist, die die Aufnahme in der Verstaustellung der Tischplatte nach außen hin verschließt. Dabei ist es denkbar, dass die verschwenkbare Klappe nicht die gesamte Tischvorrichtung bedeckt, sondern lediglich die Verstellvorrichtung, sodass diese nicht störend auffällt. Dadurch können die Tischvorrichtung und insbesondere die Tischplatte in der Verstaustellung besonders vorteilhaft, ohne dass sie einem Gast störend auffallen könnten, und nicht einsehbar in der Flugzeugsitzvorrichtung angeordnet werden.

Es wird zudem vorgeschlagen, dass das erste Drehgelenk die fest in der Aufnahme angebundene Linearführung mit der Tischplatte koppelt. Unter "Koppeln" soll dabei in diesem Zusammenhang insbesondere verstanden werden, dass sowohl die in der Aufnahme angebundene Linearführung als auch die Tischplatte an das erste Drehgelenk angebunden sind, also die Tischplatte und die in der Aufnahme angebundene Linearführung über das erste Drehgelenk miteinander verbunden sind. Dadurch kann die Tischplatte zur Ausführung der Verstellbewegung besonders vorteilhaft mit der Linearführung und dadurch mit der Aufnahme verbunden werden.

Ferner wird vorgeschlagen, dass das eine Drehgelenk, welches die fest in der Aufnahme angebundene erste Linearführung mit der Tischplatte koppelt, auf einen Maximalschwenkwinkel begrenzt ist. Unter einem "Maximalschwenkwinkel" soll dabei insbesondere ein Winkel verstanden werden, um den das Drehgelenk maximal um seine Rotationsachse rotieren kann. Der Maximalschwenkwinkel liegt dabei in einem Bereich von 70 Grad bis 180 Grad, wobei der Maximalschwenkwinkel vorzugsweise 110 Grad und in einer besonders vorteilhaften Ausgestaltung 90 Grad beträgt. Dadurch kann vorteilhaft eine maximal ausgefahrene Gebrauchsstellung der Tischplatte eingestellt werden.

Zudem wird vorgeschlagen, dass die Verstellvorrichtung ein drittes Drehgelenk aufweist, das die zweite Linearführung drehbar zu der Konsole lagert. Unter einem "dritten Drehgelenk" soll dabei insbesondere ein weiteres Drehgelenk verstanden werden, das eine von den anderen Drehgelenken abweichende Rotationsachse aufweist. Dadurch kann die zweite Linearführung besonders einfach und vorteilhaft verschwenkbar zu der ersten Linearführung angebracht werden.

Weiterhin wird vorgeschlagen, dass das zweite Drehgelenk die Tischplatte mit der zweiten Linearführung koppelt. Dadurch kann die Tischplatte zur Ausführung der Verstellbewegung besonders vorteilhaft mit der zweiten Linearführung gekoppelt werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung in einem ersten Ausführungsbeispiel mit einer Tischplatte einer Tischvorrichtung in einer Verstaustellung,
- Fig. 2: eine schematische Darstellung zu Beginn einer Verstellbewegung der Tischplatte aus der Verstaustellung heraus,
- Fig. 3: eine weitere Darstellung während einer Verstellbewegung der Tischplatte aus der Verstaustellung heraus, kurz vor dem Erreichen einer primären Gebrauchsstellung,
- Fig. 4: eine schematische Darstellung der Tischvorrichtung mit der Tischplatte in der primären Gebrauchsstellung,
- Fig. 5: eine schematische Darstellung einer erfindungsgemäßen Flugzeugsitzvorrichtung mit einer Konsole und der Tischvorrichtung in der primären Gebrauchsstellung,
- Fig. 6: eine Draufsicht auf die erfindungsgemäße Tischvorrichtung,
- Fig. 7: eine schematische Darstellung der Tischvorrichtung mit einem Verriegelungsmechanismus,
- Fig. 8: eine überlagerte Darstellung eines verriegelten Zustands und eines entriegelten Zustands des Verriegelungsmechanismus,
- Fig. 9: eine schematische Darstellung eines Teils einer erfindungsgemäßen Flugzeugsitzvorrichtung in einem zweiten Ausführungsbeispiel mit einer Verstellvorrichtung und einem Drehgelenk,
- Fig. 10: eine Schnittansicht durch das Drehgelenk der Verstellvorrichtung der erfindungsgemäßen Flugzeugsitzvorrichtung und
- Fig. 11: eine Explosionsdarstellung des Drehgelenks der Verstellvorrichtung der erfindungsgemäßen Flugzeugsitzvorrichtung.

### Beschreibung der Ausführungsbeispiele

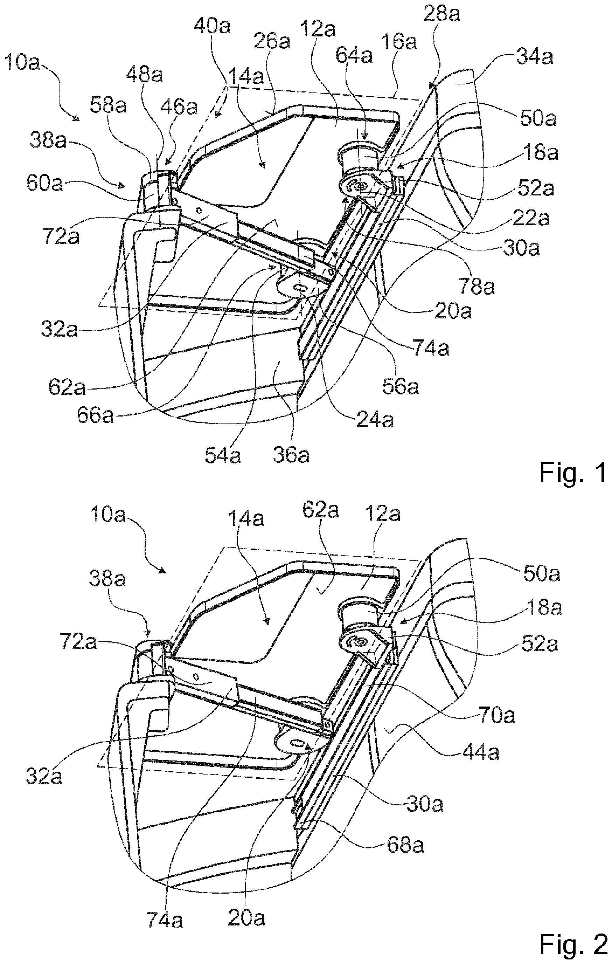

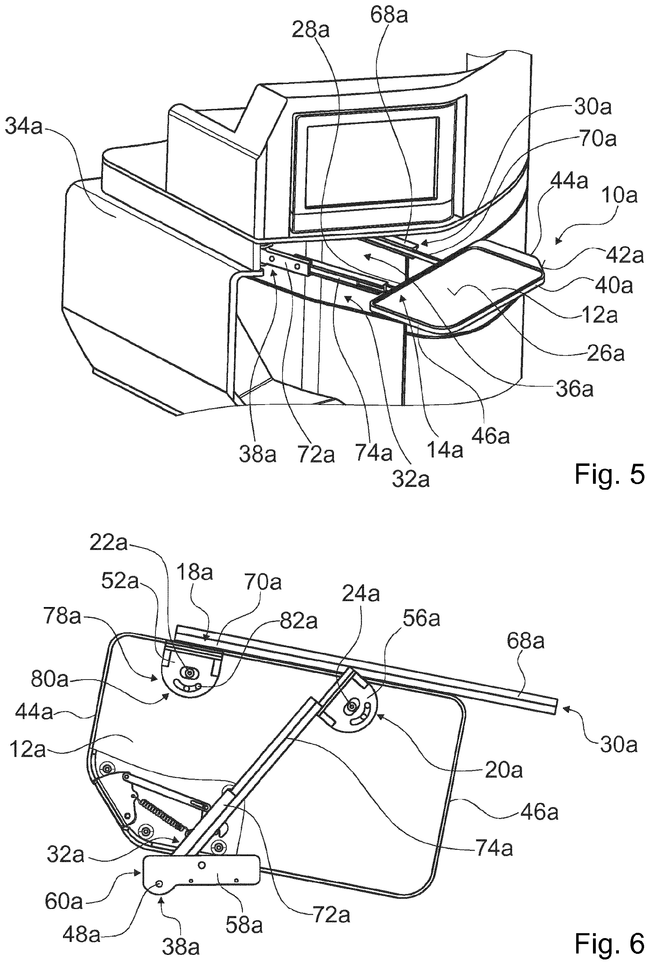

Die Figuren 1 bis 8 zeigen eine erfindungsgemäße Flugzeugsitzvorrichtung. Die Flugzeugsitzvorrichtung ist Teil eines nicht näher dargestellten Flugzeugsitzes in einem nicht näher dargestellten Sitzbereich. Die Flugzeugsitzvorrichtung ist dem nicht näher dargestellten Flugzeugsitz zugeordnet. Der Sitzbereich ist als ein Bereich ausgebildet, in dem zumindest ein Flugzeugsitz angeordnet ist. Der Flugzeugsitz ist dabei als ein Fluggastsitz ausgebildet, der dazu vorgesehen ist, dass ein Fluggast während eines Flugs darauf sitzen kann. Grundsätzlich ist es auch denkbar, dass in einem Sitzbereich zwei oder mehr Flugzeugsitze angeordnet sind. Dabei wäre vorzugsweise jedem Flugzeugsitz eine Flugzeugsitzvorrichtung zugeordnet. Die Flugzeugsitzvorrichtung umfasst eine Tischvorrichtung 10a zur Bereitstellung einer Tischauflagefläche 26a, auf der ein Fluggast, der auf dem Flugzeugsitz sitzt, Gegenstände ablegen kann. Dazu umfasst die Tischvorrichtung 10a eine Tischplatte 12a. Die Tischplatte 12a bildet an ihrer Oberseite die Tischauflagefläche 26a aus. Die Tischauflagefläche 26a der Tischplatte 12a ist in einem montierten Zustand auf einer, einer Aufständerebene, auf der der Flugzeugsitz mit der Flugzeugsitzvorrichtung aufgeständert ist, abgewandten Seite angeordnet. Die Tischplatte 12a ist als eine flache Platte ausgebildet, die einen in etwa rechteckigen Querschnitt aufweist. Dabei sind Kanten an einem hinteren Ende 28a der Tischplatte 12a abgerundet. An einem vorderen Ende 40a weist die Tischplatte 12a auf einer ersten Seite 44a eine Abschrägung 42a auf. Auf einer zweiten Seite 46a an dem vorderen Ende 40a weist die Tischplatte 12a ebenfalls einen Radius auf. Dabei weist die Tischplatte 12a in ihrer Erstreckung von der ersten Seite 44a zu der zweiten Seite 46a ihre Haupterstreckung auf. In einer Erstreckung von dem vorderen Ende 40a zu dem hinteren Ende 28a weist der Tisch eine kleinere Erstreckung auf als in seiner Haupterstreckung. Grundsätzlich ist es auch denkbar, dass die Tischplatte eine andere, dem Fachmann als sinnvoll erscheinende Form aufweist, wie beispielsweise eine quadratische oder runde Form. Grundsätzlich ist es ebenfalls denkbar, dass die Tischplatte 12a aus mehreren Teilen gebildet ist, die beispielsweise mittels Scharnieren schwenkbar miteinander gekoppelt sind. Dabei ist es möglich, dass die Tischplatte 12a aus einem Hauptteil und einem oder mehreren kleineren Zusatzteilen gebildet ist, die bei Bedarf aufgeklappt werden können, um die Tischauflagefläche der Tischvorrichtung 10a zu vergrößern. Die Tischplatte 12a ist dabei aus einem Aluminium gebildet. Grundsätzlich ist es auch denkbar, dass die Tischplatte 12a aus einem anderen Material, wie beispielsweise aus einem anderen Leichtmetall, einem Kunststoff und/oder einem Faserverbundwerkstoff, gebildet ist.

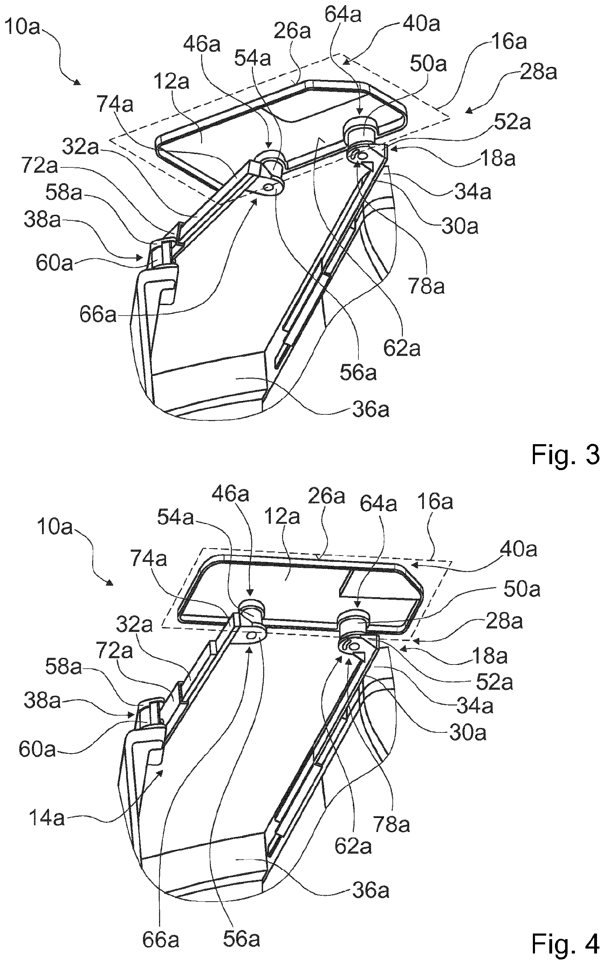

Die Tischvorrichtung 10a umfasst eine Verstellvorrichtung 14a. Die Verstellvorrichtung 14a ist dazu vorgesehen, die Tischplatte 12a zwischen einer Verstaustellung und zumindest einer Gebrauchsstellung zu verstellen. Figur 1 zeigt die Tischplatte 12a dabei in der Verstaustellung. Dabei ist die Verstaustellung als eine Stellung der Tischplatte 12a ausgebildet, in der die Tischplatte 12a nicht von einem Passagier benutzbar ist. In der Verstaustellung ist die Tischplatte 12a verstaut und ist aus einem Bewegungsbereich des Sitzbereichs herausbewegt, wodurch sie nicht störend im Weg eines Passagiers ist. Dabei ist die Tischauflagefläche 26a in der Verstaustellung verdeckt und kann nicht zur Ablage benutzt werden. In der Verstaustellung ist die Tischplatte 12a gesichert und ist gegen ein unerwünschtes Herausbewegen aus der Verstaustellung gesichert. In einer Gebrauchsstellung ist die Tischauflagefläche 26a der Tischplatte 12a freigegeben und kann zur Auflage von Elementen genutzt werden. Dabei weist die Tischplatte 12a mehrere Gebrauchsstellungen auf. Figur 4 zeigt die Tischplatte 12a dabei in einer primären Gebrauchsstellung. In der primären Gebrauchsstellung ist die Tischplatte 12a mittels der Verstellvorrichtung 14a maximal ausgefahren. Dabei ist die Tischplatte 12a maximal an den Flugzeugsitz herangefahren, dem sie zugeordnet ist. Dabei ist die Tischplatte 12a in der primären Gebrauchsstellung arretiert und verfährt erst nach einer auf die Tischplatte 12a aufgebrachten Betätigungskraft wieder in Richtung der Verstaustellung. In einer zweiten Gebrauchsstellung ist die Tischplatte 12a in einer Position zwischen der primären Gebrauchsstellung und der Verstaustellung angeordnet (Vgl. Figur 3). Erreicht die Tischplatte 12a die primäre Gebrauchsstellung, kann die Verstellvorrichtung 14a ein akustisches oder haptisches Signal ausgeben. So kann eine Person, die die Tischplatte 12a in die primäre Gebrauchsstellung verfahren hat, einfach erkennen, wann die primäre Gebrauchsstellung erreicht ist. Zur Erzeugung des Signals weist die Verstellvorrichtung 14a einen nicht näher dargestellten Druckstift auf, der in der primären Gebrauchsstellung hörbar in eine Aufnahme einrastet. Der Druckstift kann dabei auch zur Verriegelung der Tischplatte 12a in der primäre Gebrauchsstellung verwendet werden. Dabei ist die Tischauflagefläche 26a der Tischplatte 12a in der zweiten Gebrauchsstellung der Tischplatte 12a freigegeben und kann zur Auflage von Gegenständen genutzt werden.

Zur Aufnahme der Tischvorrichtung 10a umfasst die Flugzeugsitzvorrichtung eine Konsole 34a. Die Konsole 34a ist als ein Element des Sitzbereichs ausgebildet, an und in dem Anbauteile des Sitzbereichs angebracht sind. Dabei sind beispielsweise ein Bildschirm und/oder Ablage- und Aufnahmeelemente in und an der Konsole 34a angeordnet. Zur Verstauung der Tischvorrichtung 10a umfasst die Konsole 34a eine Aufnahme 36a. Die Tischvorrichtung 10a ist zumindest in der Verstaustelllung der Tischplatte 12a komplett in der Aufnahme 36a angeordnet. Die Aufnahme 36a ist zu dem Sitzbereich hin geöffnet. Eine Öffnung, die die Aufnahme 36a zum Sitzbereich hin öffnet, ist dabei so groß, dass die Tischplatte 12a und die Verstellvorrichtung 14a aus der Aufnahme 36a herausfahren können, um in eine Gebrauchsstellung gebracht zu werden. In der Verstaustellung ist die Tischvorrichtung 10a komplett in der Aufnahme 36a der Konsole 34a angeordnet. Die Tischplatte 12a und die Verstellvorrichtung 14a sind für einen Passagier nicht störend in der Konsole 34a angeordnet. Dabei schließt die Tischplatte 12a mit ihrer ersten Seite die Aufnahme 36a der Konsole 34a ab. Grundsätzlich ist es auch denkbar, dass die Konsole 34a eine schwenkbare Klappe aufweist, die die Aufnahme 36a nach außen hin abschließt, wenn die Tischplatte 12a in ihrer Verstaustellung komplett in der Aufnahme 36a der Konsole 34a angeordnet ist.

Zur Verstellung der Tischplatte 12a zwischen der Verstaustellung und der Gebrauchsstellung ist die Verstellvorrichtung 14a dazu vorgesehen, die Tischplatte 12a in einer linearen Verschiebebewegung und in einer Rotationsbewegung in einer Ebene 16a zu bewegen. Die Tischplatte 12a bleibt während der gesamten Verstellungsbewegung zwischen der Verstaustellung und der primären Gebrauchsstellung in der Ebene 16a, also bleibt ein Winkel zwischen der Tischauflagefläche 26a und der Aufständerebene gleich. Dabei ist es grundsätzlich denkbar, dass durch auf den Tisch wirkende Kräfte sich der Winkel zwischen der Tischauflagefläche 26a und der Aufständerebene durch Durchbiegen von Teilen der Tischvorrichtung 10a leicht verändert. Dabei weist die Tischplatte 12a einen Winkel von 3 Grad zu der Aufständerebene auf. Die Ebene 16a, in der die Tischplatte 12a in der Rotationsbewegung und in der linearen Verschiebebewegung bewegt wird, ist dabei in dem Winkel von 3 Grad zu der Aufständerebene ausgerichtet. Grundsätzlich sind hier natürlich auch andere Winkel denkbar.

Bei der linearen Verschiebebewegung wird die Tischplatte 12a entlang einer Verschiebeachse linear verschoben. Bei der Rotationsbewegung wird die Tischplatte 12a um eine Rotationsachse 22a, 24a rotiert und dadurch in ihrer Ausrichtung verändert. Dabei sind die lineare Verschiebebewegung und die Rotationsbewegung unabhängig voneinander. Die Tischplatte 12a kann sowohl rein linear verschoben als auch lediglich rotatorisch bewegt werden. Die lineare Verschiebebewegung und die Rotationsbewegung sind nicht aneinander gekoppelt. Zur Verstellung der Tischplatte 12a von der Verstaustellung in eine Gebrauchsstellung oder umgekehrt muss die Tischplatte 12a allerdings sowohl in der Rotationsbewegung als auch in der linearen Verschiebebewegung bewegt werden. Die lineare Verschiebebewegung und die Rotationsbewegung sind dabei zumindest teilweise aufeinanderfolgend ausgebildet. Dabei wird die Tischplatte 12a, von der Verstaustellung ausgehend, zunächst lediglich in der linearen Verschiebebewegung bewegt. Nach der reinen linearen Verschiebebewegung wird die Tischplatte 12a dann in einer überlagerten Bewegung von der linearen Verschiebebewegung und der Rotationsbewegung bewegt. Zum Abschluss der Verstellung der Tischplatte 12a von der Verstaustellung in die primäre Gebrauchsstellung wird die Tischplatte 12a lediglich in der Rotationsbewegung bewegt. Grundsätzlich ist es auch denkbar, dass die Tischplatte 12a bei der Verstellung zwischen der Verstaustellung und einer Gebrauchsstellung oder umgekehrt immer lediglich in der linearen Verschiebebewegung oder lediglich in der Rotationsbewegung bewegt wird. Dabei kann die Tischplatte 12a von einer Person zumindest teilweise beliebig in der linearen Verschiebebewegung und der Rotationsbewegung bewegt werden. Grundsätzlich ist es auch denkbar, dass die Verstellvorrichtung 14a eine Zwangsführung aufweist, die lediglich einen möglichen Verstellweg zwischen der Verstaustellung und der primären Gebrauchsstellung zulässt.

Die Verstellvorrichtung 14a umfasst zur Ausführung der Rotationsbewegung der Tischplatte 12a drei Drehgelenke 18a, 20a, 38a. Die drei Drehgelenke 18a, 20a, 38a sind dazu vorgesehen, die Tischplatte 12a drehbar zu lagern. Die drei Drehgelenke 18a, 20a, 38a bilden dabei jeweils unterschiedliche Rotationsachsen 22a, 24a, 48a aus. Die Rotationsachsen 22a, 24a, 48a der Drehgelenke 18a, 20a, 38a verlaufen dabei parallel zueinander. Die Rotationsachsen 22a, 24a, 48a der drei Drehgelenke 18a, 20a, 38a sind dabei beabstandet zueinander angeordnet. Die Drehgelenke 18a, 20a, 38a bilden dabei jeweils ein erstes Anbindungselement 50a, 54a, 58a und ein zweites Anbindungselement 52a, 56a, 60a aus. Die zwei Anbindungselemente 50a, 52a, 54a, 56a, 58a, 60a eines Drehgelenks 18a, 20a, 38a sind dabei um ihre entsprechende Rotationsachse drehbar zueinander. Dabei sind das erste Drehgelenk 18a und das zweite Drehgelenk 20a unterhalb der Tischauflagefläche 26a der Tischplatte 12a angeordnet. Die beiden Drehgelenke 18a, 20a sind an einer Unterseite 62a der Tischplatte 12a angebracht. Dabei sind die beiden Drehgelenke 18a, 20a jeweils an dem hinteren Ende 28a der Tischplatte 12a angeordnet. Die Tischplatte 12a weist zur Anbindung der Drehgelenke 18a, 20a an ihrer Unterseite 62a jeweils zwei Aufnahmen 64a, 66a auf. Die zwei Drehgelenke 18a, 20a sind dabei jeweils mit ihrem ersten Anbindungselement 50a, 54a über die Aufnahmen 64a, 66a fest mit der Tischplatte 12a verbunden. Die ersten Anbindungselemente 50a, 54a der Drehgelenke 18a, 20a sind dabei mittels einer dem Fachmann als sinnvoll erscheinenden stoff- und/oder formschlüssigen Verbindung in der entsprechenden Aufnahme der Tischplatte 12a angeordnet, wie beispielsweise mittels einer Klebeverbindung oder einer Schraubenverbindung. Dabei ist das erste Drehgelenk 18a in einem an der Tischplatte 12a angebundenen Zustand der ersten Seite 44a der Tischplatte 12a zugewandt. Das zweite Drehgelenk 20a ist in einem an der Tischplatte 12a angebundenen Zustand der zweiten Seite 46a der Tischplatte 12a zugewandt. Dabei erstreckt sich das erste Drehgelenk 18a weiter von der Unterseite 62a der Tischplatte 12a weg als das zweite Drehgelenk 20a. Ein Anbindungspunkt des zweiten Anbindungselements 52a des ersten Drehgelenks 18a weist dadurch einen größeren Abstand zu der Unterseite 62a der Tischplatte 12a auf als ein Anbindungspunkt des zweiten Anbindungselements 56a des zweiten Drehgelenks 20a.

Zur Ausführung der linearen Verschiebebewegung umfasst die Verstellvorrichtung 14a zwei Linearführungen 30a, 32a. Die Linearführungen 30a, 32a weisen jeweils zwei zueinander verschiebbare Führungselemente 68a, 70a, 72a, 74a auf. Die Führungselemente 68a, 70a, 72a, 74a sind dabei als Gleitschienen ausgebildet. Die als Gleitschienen ausgebildeten Führungselemente 68a, 70a, 72a, 74a einer Linearführung 30a, 32a stehen in einem formschlüssigen Kontakt miteinander und sind in einer Verschiebeachse zueinander verschiebbar. Dabei weisen die als Gleitschienen ausgebildeten Führungselemente 68a, 70a, 72a, 74a jeweils Kontaktflächen auf, über die sie jeweils mit dem entsprechenden, korrespondierenden, als Gleitschiene ausgebildeten Führungselement 68a, 70a, 72a, 74a in Kontakt stehen. Die Linearführungen 30a, 32a sind dabei als beschichtete Linearführungen ausgebildet. Dadurch weisen die Linearführungen besonders vorteilhafte Gleiteigenschaften auf und sind insbesondere leichtläufig und geräuscharm. Dazu weisen die Führungselemente 68a, 70a, 72a, 74a der Linearführungen 30a, 32a auf ihren Kontaktflächen jeweils eine Beschichtung auf. Die Beschichtung ist als eine Gleitflockbeschichtung ausgebildet. Die als Gleitflockbeschichtung ausgebildete Beschichtung besteht dabei aus in einer Matrix aus einem Kunststoff eingebetteten Fasern. Die Fasern sind dabei vorzugsweise als Polymerfasern ausgebildet. Die Kombination aus den in den Kunststoff eingebetteten Fasern verringert einen Reibwiderstand der Kontaktflächen signifikant.

Die erste Linearführung 30a ist fest in der Aufnahme 36a der Konsole 34a angeordnet. Die erste Linearführung 30a ist dabei an einer ersten Seite 76a der Aufnahme 36a angeordnet. Das erste Führungselement 68a ist dabei starr in der Aufnahme 36a an die Konsole 34a abgebunden. Dabei ist das erste Führungselement 68a mittels einer nicht näher dargestellten Schraubenverbindung starr mit der Konsole 34a verbunden. Das erste Führungselement 68a der ersten Linearführung 30a kann sich dadurch nicht zu der Konsole 34a bewegen. Eine Verschiebeachse der ersten Linearführung 30a ist dadurch fest fixiert. Das zweite Führungselement 70a der ersten Linearführung 30a ist in der Verschiebeachse zu dem ersten Führungselement 68a und dadurch auch zu der Konsole 34a verschiebbar. Die erste Linearführung 30a ist dabei mit dem ersten Drehgelenk 18a gekoppelt. Das erste Drehgelenk 18a verbindet die erste Linearführung 30a mit der Tischplatte 12a. Das zweite Führungselement 70a der ersten Linearführung 30a weist dabei an einem dem ersten Führungselement 68a abgewandten Ende eine Aufnahme für das erste Drehgelenk 18a auf. Über die Aufnahme des zweiten Führungselements 70a ist das zweite Anbindungselement des ersten Drehgelenks 18a an das zweite Führungselement 70a und damit die Linearführung 30a angebunden. Über das erste Drehgelenk 18a ist die Tischplatte 12a drehbar zu der ersten Linearführung 30a angeordnet. Dabei ist das erste Drehgelenk 18a, das die erste Linearführung 30a mit der Tischplatte 12a koppelt, auf einen Maximalschwenkwinkel von 90 Grad begrenzt. Dazu weist das erste Drehgelenk 18a eine Begrenzungsvorrichtung 78a auf. Die Begrenzungsvorrichtung 78a weist eine in das zweite Anbindungselement 52a des ersten Drehgelenks 18a eingebrachte bogenförmige Nut 80a und einen von dem ersten Anbindungselement 50a ausgebildeten, in die Nut 80a eingreifenden Stift 82a auf. Die bogenförmige Nut 80a bildet einen Kreisbogen von 90 Grad aus. Der in die Nut 80a eingreifende Stift 82a begrenzt eine Rotation des ersten Drehgelenks 18a dadurch, dass er an die Enden der bogenförmigen Nut 80a anstößt. Dadurch kann eine sehr einfache Drehbegrenzung für das erste Drehgelenk 18a erreicht werden.

Die beiden Linearführungen 30a, 32a sind verschwenkbar zueinander angeordnet. Dazu ist die zweite Linearführung 32a schwenkbar zu der Konsole 34a ausgebildet. Die zweite Linearführung 32a ist dazu schwenkbar in der Aufnahme 36a der Konsole 34a angebunden. Die zweite Linearführung 32a ist dabei auf einer zweiten Seite 84a der Aufnahme 36a, die der ersten Seite 76a der Aufnahme 36a gegenüberliegt angebracht. Das dritte Drehgelenk 38a lagert die zweite Linearführung 32a dabei drehbar zu der Konsole 34a. Das dritte Drehgelenk 38a ist mit seinem ersten Anbindungselement58 fest mit der Konsole 34a verbunden. Das erste Anbindungselement 58a des dritten Drehgelenks 38a ist dabei mittels einer Schraubenverbindung an der zweiten Seite 84a der Aufnahme 36a angeschraubt. Grundsätzlich ist es auch denkbar, dass das erste Anbindungselement 58a mittels einer anderen Verbindungsart, wie beispielsweise mittels einer Klebeverbindung oder einer anderen formschlüssigen Verbindung, mit der Aufnahme 36a gekoppelt ist. Das erste Anbindungselement 58a des dritten Drehgelenks 38a weist eine von zwei Armen gebildete Aufnahme 86a auf, zwischen denen ein Bolzen in Aufnahmelöchern gelagert ist, über den das zweite Anbindungselement 60a des dritten Drehgelenks 38a schwenkbar mit dem ersten Anbindungselement 58a verbunden ist. Grundsätzlich ist auch eine andere Ausgestaltung des Drehgelenks 38a denkbar. Das zweite Anbindungselement 60a des dritten Drehgelenks 38a ist starr mit dem ersten Führungselement 72a der zweiten Linearführung 32a verbunden. Dabei ist das zweite Anbindungselement 60a des dritten Drehgelenks 38a mittels einer Schraubenverbindung fest mit dem ersten Führungselement 72a der zweiten Linearführung 32a verbunden. Grundsätzlich wäre es auch denkbar, dass das zweite Anbindungselement 60a des dritten Drehgelenks 38a und das erste Führungselement 72a der zweiten Linearführung 32a einstückig miteinander ausgebildet sind. Das erste Führungselement 72a ist über das dritte Drehgelenk 38a schwenkbar in der Konsole 34a angeordnet. Eine Verschiebeachse, in der das zweite Führungselement 74a zu dem ersten Führungselement 72a der zweiten Linearführung 32a verschiebbar ist, ist dadurch um die Rotationsachse 48a, die das dritte Drehgelenk 38a ausbildet, verschwenkbar.

Das zweite Drehgelenk 20a koppelt die Tischplatte 12a mit der zweiten Linearführung 32a. Dabei ist das zweite Drehgelenk 20a mit dem zweiten Führungselement 74a der zweiten Linearführung 32a gekoppelt. Das zweite Anbindungselement 56a des zweiten Drehgelenks 20a ist dabei fest mit dem zweiten Führungselement 74a der zweiten Linearführung 32a verbunden. Da das erste Anbindungselement 54a des zweiten Drehgelenks 20a fest mit der Tischplatte 12a verbunden ist, ist das zweite Führungselement 74a der zweiten Linearführung 32a drehbar mit der Tischplatte 12a gekoppelt. Die Tischplatte 12a ist dabei über das zweite Drehgelenk 20a, die zweite Linearführung 32a und das dritte Drehgelenk 38a mit der zweiten Seite 84a der Aufnahme 36a der Konsole 34a verbunden. Die Tischplatte 12a ist über das erste Drehgelenk 18a und die erste Linearführung 30a mit der ersten Seite 76a der Aufnahme 36a der Konsole 34a verbunden.

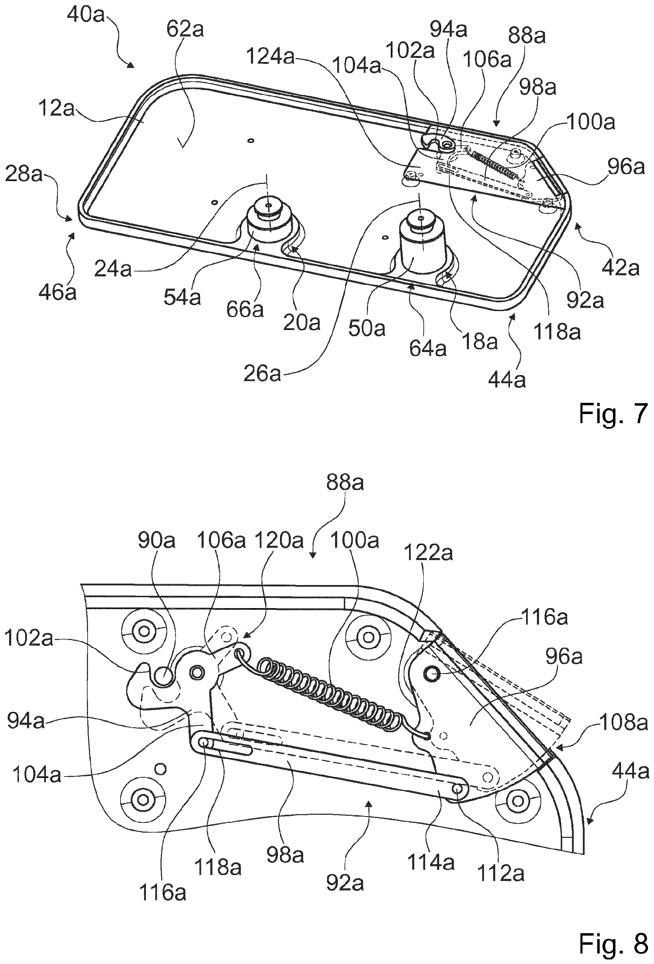

Zur Fixierung der Tischplatte 12a in der Verstaustellung umfasst die Tischvorrichtung 10a einen Verriegelungsmechanismus 88a. Der Verriegelungsmechanismus 88a ist dazu vorgesehen, die Tischplatte 12a in der Verstaustellung gegen ein unabsichtliches Verstellen zu sichern. Der Verriegelungsmechanismus 88a verbindet die Tischplatte 12a in einer Verriegelstellung direkt formschlüssig mit der Konsole 34a. Dazu weist der Verriegelungsmechanismus 88a einen Verriegelungsstift 90a auf. Der Verriegelungsstift 90a ist starr mit der Konsole 34a verbunden. Dabei ist es denkbar, dass der Verriegelungsstift 90a einstückig mit der Konsole 34a ausgebildet ist. Der Verriegelungsstift 90a erstreckt sich dabei von unten her an die Unterseite 62a der Tischplatte 12a heran. Der Verriegelungsmechanismus 88a umfasst eine Verriegelungsmechanik 92a, die fest mit der Tischplatte 12a verbunden ist. Die Verriegelungsmechanik 92a ist an der Unterseite 62a der Tischplatte 12a angeordnet. Dabei ist die Verriegelungsmechanik 92a an der ersten Seite 44a der Tischplatte 12a gelegen. Die Verriegelungsmechanik 92a umfasst einen schwenkbar gelagerten Verriegelungshaken 94a. Der Verriegelungshaken 94a ist über eine Gleitlagerung drehbar an der Unterseite 62a der Tischplatte 12a angeordnet. Der Verriegelungshaken 94a umfasst ein als Haken ausgebildetes Formschlusselement 102a, das dazu vorgesehen ist, in der Verriegelstellung den Verriegelungsstift 90a zu umgreifen und so formschlüssig mit dem Verriegelungsstift 90a gekoppelt zu werden. Der Verriegelungshaken 94a bildet zwei Anbindungsarme 104a, 106a aus, an denen weitere Elemente der Verriegelungsmechanik 92a anbindbar sind. Zur Betätigung des Verriegelungsmechanismus 88a umfasst die Verriegelungsmechanik 92a ein Betätigungselement 96a. Das Betätigungselement 96a ist dazu vorgesehen, von einer Person betätigt zu werden. Das Betätigungselement 96a ist an dem ersten Ende der Tischplatte 12a, in dem Bereich der Abschrägung 42a angeordnet. Dabei weist die Tischplatte 12a in der ersten Seite 44a im Bereich der Abschrägung 46a eine Öffnung 108a auf, in der das Betätigungselement 96a teilweise angeordnet ist und so von außen von einer Person betätigbar ist. Das Betätigungselement 96a ist um eine Schwenkachse 110a drehbar auf der Unterseite 62a der Tischplatte 12a angeordnet. Um diese Schwenkachse 110a kann das Betätigungselement 96a von einem Bediener zumindest um 3 Grad verschwenkt werden. Die Verriegelungsmechanik 92a umfasst einen Hebelarm 98a, der zur Übertragung einer Entriegelbewegung von dem Betätigungselement 96a auf den Verriegelungshaken 94a vorgesehen ist. Der Hebelarm 98a ist an einem ersten Ende mit dem Betätigungselement 96a gekoppelt. Der Hebelarm 98a ist dabei schwenkbar mit dem Betätigungselement 96a gekoppelt. Dazu bildet das Betätigungselement 96a einen Stift 112a aus, mit dem der Hebelarm 98a über ein Durchgangsloch 114a, das in den Hebelarm 98a eingebracht ist, formschlüssig verbunden ist. An einem zweiten Ende ist der Hebelarm 98a schwenkbar mit dem Anbindungsarm 104a des Verriegelungshakens 94a gekoppelt. Dabei bildet der Verriegelungsarm 104a einen Stift 116a aus, mit dem der Hebelarm 98a über ein Langloch 118a formschlüssig verbunden ist. Zur Erzeugung einer Rückstellkraft für das Betätigungselement 96a und den Verriegelungshaken 94a weist die Verriegelungsmechanik 92a ein Federelement 100a auf. Das Federelement 100a ist als Schraubenfeder ausgebildet. Das Federelement 100a ist mit dem zweiten Anbindungsarm 106a des Verriegelungshakens 94a und dem Betätigungselement 96a verbunden. Dabei weist der Anbindungsarm 106a des Verriegelungshakens 94a und das Betätigungselement 96a jeweils ein Durchgangsloch 120a, 122a auf, in die das Federelement 100a jeweils eingehängt ist. In einer Verriegelstellung ist das Federelement 100a vorgespannt. Durch eine Entriegelbewegung, in der das Betätigungselement 96a und über den Hebelarm 98a auch der Verriegelungshaken 94a verschwenkt werden, wird das Federelement 100a gedehnt und dadurch weiter gespannt. Durch die Dehnung des Federelements 100a entsteht die Rückstellkraft, die das Betätigungselement 96a und den Verriegelungshaken 94a nach Wegfall einer von einem Benutzer aufgebrachten Betätigungskraft wieder zurück in die Verriegelstellung zieht. In Figur 8 ist die Verriegelungsmechanik 92a in der Verriegelstellung und gestrichelt angedeutet in der Entriegelstellung dargestellt. Dabei ist bei der Darstellung der Entriegelstellung aus Übersichtlichkeitsgründen das Federelement 100a weggelassen. Wie in Figur 7 dargestellt, umfasst der Verriegelungsmechanismus 88a eine Abdeckplatte 124a, die die Verriegelungsmechanik 92a nach unten hin abdeckt. Die Abdeckplatte 124a ist dabei lediglich gestrichelt dargestellt.

Im Folgenden soll kurz eine Verstellung der Tischplatte 12a zwischen der Verstaustellung und der primären Gebrauchsstellung beschrieben werden. In der Verstaustellung ist die Tischplatte 12a vollständig in der Aufnahme 36a der Konsole 34a angeordnet und über den Verriegelungsmechanismus verriegelt. Dabei sind die beiden Linearführungen 30a, 32a komplett eingefahren. Die zweite Linearführung 32a ist dabei, wie in Figur 1 zu sehen, mittels des dritten Drehgelenks 38a nach hinten geschwenkt. Dabei ist die zweite Linearführung 32a um mehr als 90 Grad zu der ersten Linearführung 30a verschwenkt. Durch die unterschiedlichen Höhenanordnungen der zweiten Anbindungselemente 52a, 56a des ersten Drehgelenks 18a und des zweiten Drehgelenks 20a ist die erste Linearführung 30a unterhalb der zweiten Linearführung 32a angeordnet. Dadurch kann, wie in den Figuren 1 bis 3 zu erkennen, die zweite Linearführung 32a und das zweite Drehgelenk 20a die erste Linearführung 30a übergreifen. Die zweite Linearführung 32a und das zweite Drehgelenk 20a sind dabei in der Verstaustellung und zu Beginn einer Verstellung aus der Verstaustellung zwischen der Unterseite 62a der Tischplatte 12a und der ersten Linearführung 30a angeordnet. Dadurch kann die Tischvorrichtung 10a vorteilhaft platzsparend ausgebildet werden. In der Verstaustellung schließt die erste Seite 44a der Tischplatte 12a die Aufnahme 36a nach außen hin ab. Eine auf dem zugeordneten Flugzeugsitz sitzende Person kann hierbei die erste Seite 44a der Tischplatte 12a und das darin integrierte Betätigungselement 96a sehen und erreichen. Zur Entriegelung der Tischplatte 12a kann eine Person nun das Betätigungselement entsprechend der Figur 8 betätigen und um die Schwenkachse 110a schwenken. Über den Hebelarm 98a wird der Verriegelungshaken 94a gedreht und das Formschlusselement 102a des Verriegelungshakens 94a löst den Formschluss mit dem Verriegelungsstift 90a. Durch das Lösen des Formschlusses zwischen dem Formschlusselement 102a des Verriegelungshakens 94a und dem Verriegelungsstift 90a kann die Tischplatte 12a aus der Aufnahme 36a gezogen werden. Nachdem die Tischplatte 12a ein wenig aus der Aufnahme 36a herausgezogen wurde und das Formschlusselement 102a des Verriegelungshakens 94a von dem Verriegelungsstift 90a entfernt ist, kann eine Betätigungskraft von dem Betätigungselement 96a wieder entfernt werden, wodurch das Betätigungselement 96a und der Verriegelungshaken 94a durch die Rückstellkraft des Federelements 100a wieder in ihre Verriegelstellung zurückrotieren. Die Tischplatte 12a kann nun von einer Person ergriffen und weiter bewegt werden. Zunächst ist dabei, wie in Figur 1 und Figur 2 zu sehen, die zweite Linearführung 32a nach hinten geneigt und zwischen der Tischplatte 12a und der ersten Linearführung 30a angeordnet. Bei der Verstellung aus der Verriegelstellung wird die Tischplatte 12a zunächst lediglich entlang der Verschiebeachse der ersten Linearführung 30a linear verschoben. Das erste Drehgelenk 18a bleibt dabei zunächst in seiner Ausgangsposition aus der Verstaustellung und rotiert nicht. Das zweite Führungselement 70a der ersten Linearführung 30a wird zu dem ersten Führungselement 68a verschoben. Das zweite Drehgelenk 20a und das dritte Drehgelenk 38a rotieren, um der Bewegung der Tischplatte 12a zu folgen; dabei verschieben sich auch die Führungselemente 72a, 74a der zweiten Linearführung 32a zueinander. Ist die Tischplatte 12a komplett aus der Aufnahme 36a der Konsole 34a herausgefahren, kann die Tischplatte 12a um das erste Drehgelenk 18a rotiert werden. Dabei kann die Tischplatte 12a, wenn sie aus der Aufnahme 36a herausgefahren ist, in mehreren Gebrauchsstellungen zur Ablage benutzt werden. Ist die erste Linearführung 30a komplett ausgefahren, also das zweite Führungselement 70a maximal zu dem ersten Führungselement 68a verstellt, wird die Tischplatte zum Erreichen der primären Gebrauchsstellung um das erste Drehgelenk18 rotiert (siehe Figur 3). Das erste Drehgelenk 18a wird dabei so weit gedreht, bis die Begrenzungsvorrichtung 78a anschlägt und so ein weiteres Rotieren des ersten Drehgelenks 18a und damit der Tischplatte 12a verhindert. Ist das erste Drehgelenk 18a bis zu seinem Anschlag rotiert, ist die Tischplatte 12a in ihrer primären Gebrauchsstellung. Eine Verstellung der Tischplatte 12a von der primären Gebrauchsstellung in die Verstaustellung erfolgt entsprechend umgekehrt.

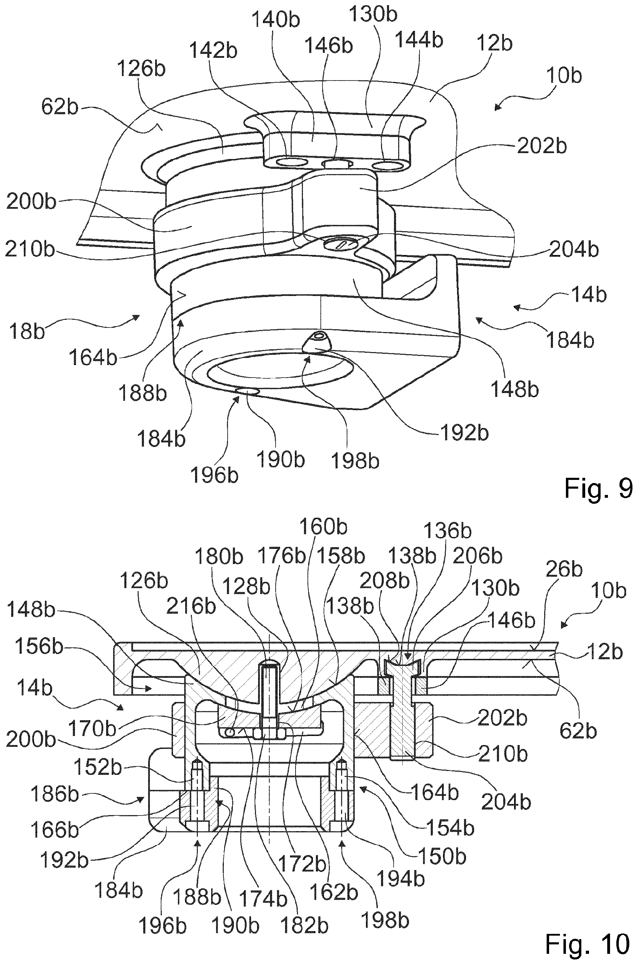

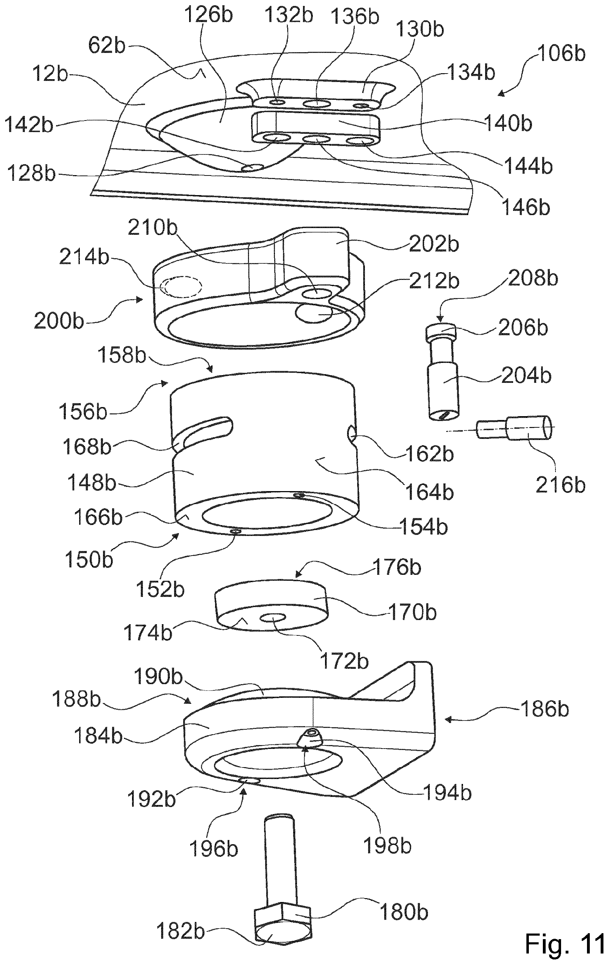

In Fig. 9 bis 11 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Fig. 1 bis 8, verwiesen werden kann. Zur Unterscheidung der Ausführungsbeispiele ist der Buchstabe a den Bezugszeichen des Ausführungsbeispiels in Fig. 1 bis 8 nachgestellt. In dem Ausführungsbeispiel der Fig. 9 bis 11 ist der Buchstabe a durch den Buchstaben b ersetzt.

Die Figuren 9 bis 11 zeigen ein zweites Ausführungsbeispiel einer erfindungsgemäßen Flugzeugsitzvorrichtung. Die Flugzeugsitzvorrichtung ist Teil eines nicht näher dargestellten Flugzeugsitzes in einem nicht näher dargestellten Sitzbereich. Die Flugzeugsitzvorrichtung umfasst eine Tischvorrichtung 10b zur Bereitstellung einer Tischauflagefläche 26b, auf der ein Fluggast, der auf dem Flugzeugsitz sitzt, Gegenstände ablegen kann. Dazu umfasst die Tischvorrichtung 10b eine Tischplatte 12b. Die Tischplatte 12b bildet an ihrer Oberseite die Tischauflagefläche 26b aus. Die Tischplatte 12b ist im Wesentlichen gleich ausgebildet wie die aus dem ersten Ausführungsbeispiel. Die Tischvorrichtung 10b umfasst eine Verstellvorrichtung 14b. Die Verstellvorrichtung 14b ist dazu vorgesehen, die Tischplatte 12b zwischen einer Verstaustellung und zumindest einer Gebrauchsstellung zu verstellen. Zur Verstellung der Tischplatte 12b zwischen der Verstaustellung und der Gebrauchsstellung ist die Verstellvorrichtung 14b dazu vorgesehen, die Tischplatte 12b in einer linearen Verschiebebewegung und in einer Rotationsbewegung im Wesentlichen in einer Ebene 16b zu bewegen. Die Verstellvorrichtung ist dabei dazu vorgesehen, die Tischplatte 12b während einer Verstellung zwischen der Verstaustellung und der Gebrauchsstellung um 3 Grad zu neigen. Die Tischplatte 12b ist dabei in der Verstaustellung parallel zu einer Aufständerebene ausgerichtet, auf der der Flugzeugsitz aufgeständert ist. In der primären Gebrauchsstellung ist die Tischplatte 12b um 3 Grad zu der Aufständerebene geneigt. Dabei ist die Tischplatte 12b in einer Flugrichtung um 3 Grad geneigt. Dabei zeigt ein vorderes Ende der Tischplatte 12b nach oben von der Aufständerebene weg. Ein hinteres Ende der Tischplatte 12b ist dabei in der primären Gebrauchsstellung nach unten in Richtung der Aufständerebene ausgerichtet. Die Verstellvorrichtung 14b ist lediglich teilweise dargestellt. Die Verstellvorrichtung 14b umfasst zur Ausführung einer linearen Verschiebebewegung zwei hier nicht näher dargestellte Linearführungen. Die Linearführungen sind gleich ausgebildet wie die entsprechenden Linearführungen aus dem ersten Ausführungsbeispiel aus den Figuren 1 bis 8. Dabei ist die erste Linearführung fest mit einer Aufnahme einer Konsole verbunden. Die zweite Linearführung ist über ein Drehgelenk der Verstellvorrichtung verschwenkbar zu der Aufnahme und dazu zu der ersten Linearführung angeordnet. Im Unterschied zu dem ersten Ausführungsbeispiel sind die Linearführungen parallel zu der Aufständerebene ausgerichtet. Verschiebeachsen der Linearführungen verlaufen dadurch parallel zu der Aufständerebene.

Die Verstellvorrichtung 14b umfasst zur Ausführung der Rotationsbewegung der Tischplatte 12b zwei weitere Drehgelenke 18b. Jedes der beiden Drehgelenke 18b ist jeweils dazu vorgesehen, die Tischplatte 12b mit einer Linearführung zu verbinden. Dabei sind die beiden Drehgelenke 18b dazu vorgesehen, die Tischplatte 12b um ihre Rotationsachse zu verdrehen und zeitgleich zu der Aufständerebene zu verkippen. Dabei wird die Tischplatte 12b während einer Verschwenkung der beiden Drehgelenke 18b um 3 Grad verkippt. Grundsätzlich ist es auch denkbar, dass die Tischplatte um einen andern Winkel, wie beispielsweise 2 Grad, zu der Aufständerebene verkippt wird. Im Folgenden ist dabei lediglich eines der beiden Drehgelenke 18b beschrieben. In den Figuren 9 bis 11 ist ebenfalls lediglich eines der beiden Drehgelenke 18b dargestellt. Die folgende Beschreibung des einen Drehgelenks 18b kann zur Erläuterung des anderen, nicht näher dargestellten Drehgelenks herangezogen werden. Die beiden Drehgelenke 18b sind gleich positioniert wie die beiden ersten Drehgelenke aus dem ersten Ausführungsbeispiel. Lediglich eine Ausgestaltung der zwei Drehgelenke 18b unterscheidet sich von den entsprechenden Drehgelenken aus dem ersten Ausführungsbeispiel der Figuren 1 bis 8.

Das Drehgelenk 18b ist an einer Unterseite 62b der Tischplatte 12b angeordnet. Das Drehgelenk 18b ist mehrteilig aufgebaut und teilweise einstückig mit der Tischplatte 12b ausgebildet. Das Drehgelenk 18b umfasst eine an der Unterseite 62b der Tischplatte 12b angeordnete Erhebung 126b. Die Erhebung 126b ist sphärisch ausgebildet. Die Erhebung 126b ist einstückig mit der Tischplatte 12b ausgebildet. Grundsätzlich ist es auch denkbar, dass die Erhebung 126b als ein separates Bauteil ausgebildet ist, das mit der Tischplatte 12b fest verbunden ist. An einem Mittelpunkt weist die sphärische Erhebung 126b ein Gewindeloch 128b auf. Das Gewindeloch 128b weist ein Innengewinde auf. Das Drehgelenk 18b umfasst weiter einen Anbindungsflansch 130b, der neben der sphärischen Erhebung 126b angeordnet ist. Der Anbindungsflansch 130b umfasst zwei beabstandet zueinander angeordnete Gewindelöcher 132b, 134b. Zwischen den beiden Gewindelöchern 132b, 134b ist ein Aufnahmeloch 136b angeordnet, das einen sphärischen Boden 138b aufweist. Der Boden 138b des Aufnahmelochs 136b ist dabei konvex ausgebildet. Weiter umfasst das Drehgelenk 18b eine Verschlussplatte 140b, die dazu vorgesehen ist, auf den Anbindungsflansch 130b geschraubt zu werden. Dazu umfasst die Verschlussplatte 140b zwei Sacklöcher 142b, 144b, die in einem montierten Zustand deckungsgleich mit den Gewindelöchern 132b, 134b des Anbindungsflansches 130b angeordnet sind. Zwischen den Sacklöchern 142b, 144b und im montierten Zustand deckungsgleich mit dem Aufnahmeloch 136b ist in der Verschlussplatte 140b ein Durchgangsloch 146b angeordnet. Ein Durchmesser des Durchgangslochs 146b ist dabei kleiner als ein Durchmesser des Aufnahmelochs 136b des Anbindungsflanschs 130b. In dem montierten Zustand ist die Verschlussplatte 140b mittels zweier Schrauben fest mit dem Anbindungsflansch 130b verbunden.

Weiter umfasst das Drehgelenk 18b ein Führungselement 148b. Das Führungselement 148b ist rohrförmig ausgebildet. An einem ersten axialen Ende 150b ist das rohrförmige Führungselement 148b geöffnet. An einer ersten axialen Wandung 166b an dem ersten axialen Ende 150b weist das rohrförmige Führungselement 148b zwei Gewindelöcher 152b, 154b zur Anbindung von Schraubenelementen auf. Die beiden Gewindelöcher 152b, 154b sind dabei auf gegenüberliegenden Seiten angeordnet und weisen einen Winkelabstand von 180 Grad zueinander auf. Das erste axiale Ende 150b ist in montiertem Zustand von der Unterseite 62b der Tischplatte 12b abgewandt. An einem zweiten axialen Ende 156b ist das rohrförmige Führungselement 148b im Wesentlichen geschlossen. Eine axiale Wandung 158b des rohrförmigen Führungselements 148b ist dabei konkav ausgebildet. Dabei weist die axiale Wandung 158b eine Konkavität auf, die einer Konvexität der sphärisch ausgebildeten Erhebung 126b entspricht. In einem montierten Zustand liegt die konkave axiale Wandung 158b an der sphärischen Erhebung 126b, die an der Tischplatte 12b angeordnet ist, an. In der axialen Wandung 158b weist das Führungselement 148b ein Durchgangsloch 160b auf. Das Durchgangsloch 160b ist als Langloch ausgebildet. Das als Langloch ausgebildete Durchgangsloch 160b ist dazu vorgesehen, dass in einem montierten Zustand ein Schraubenelement hindurchgeführt ist. Zur gezielten Verschwenkung der Tischplatte 12b weist das Führungselement 148b eine erste Führungskurve 162b für eine 3-Grad-Verstellung auf. Die Führungskurve 162b ist in eine radiale Wandung 164b des Führungselements 148b eingebracht. Dabei ist die Führungskurve 162b als ein Durchgangsloch ausgebildet. Die Führungskurve 162b ist dabei schräg zu der ersten axialen Wandung 166b des Führungselements 148b ausgerichtet. Die Führungskurve 162b weist dabei eine Haupterstreckungsrichtung auf, die in etwa parallel zu einer Haupterstreckungsrichtung des als Langloch ausgebildeten Durchgangslochs 160b in der konkaven axialen Wandung 158b verläuft. Das Führungselement 148b weist eine zweite Führungskurve 168b auf. Die zweite Führungskurve 168b ist für eine 2-Grad-Verstellung vorgesehen. Die zweite Führungskurve 168b ist auf einer gegenüberliegenden Seite der radialen Wandung 164b des Führungselements 148b angeordnet. Je nach dem welche der beiden Führungskurven 162b, 168b aktiv ist, kann die Tischplatte 12b bei einer Verstellung in die primäre Gebrauchsstellung um 3 Grad oder um 2 Grad verstellt werden. Grundsätzlich ist es auch denkbar, dass die Führungskurven 162b, 168b so ausgebildet sind, dass andere Winkel bei der Verstellung der Tischplatte 12b erreicht werden. Grundsätzlich ist es auch denkbar, dass das Führungselement 148b lediglich eine Führungskurve 162b, 168b oder zwei identisch ausgebildete Führungskurven 162b, 168b aufweist.

Zur Fixierung des Führungselements 148b an der Tischplatte 12b weist das Drehgelenk 18b eine Befestigungsplatte 170b auf. Die Befestigungsplatte 170b ist als eine Scheibe ausgebildet. Die als Scheibe ausgebildete Befestigungsplatte 170b weist einen Außendurchmesser auf, der kleiner ist als ein Innendurchmesser des rohrförmigen Führungselements 148b. Die Befestigungsplatte 170b weist ein mittig angeordnetes Durchgangsloch 172b auf. Eine erste axiale Fläche 174b der Befestigungsplatte 170b ist eben ausgebildet und dazu vorgesehen, eine Schraubenauflagefläche auszubilden. Eine zweite axiale Fläche 176b, die in einem montierten Zustand einer Innenseite der konkaven axialen Wandung 158b des Führungselements 148b zugewandt ist und dabei an dieser anliegt, ist konvex ausgebildet. Zur Befestigung des Führungselements 148b an der Tischplatte 12b weist das Drehgelenk 18b eine Befestigungsschraube 180b auf. Die Befestigungsschraube 180b ist dazu durch das Durchgangsloch 172b in der Befestigungsplatte 170b und durch das als Langloch ausgebildete Durchgangsloch 160b in der konkaven axialen Wandung 158b des Führungselement 148b geführt und in dem Gewindeloch 128, das mittig in der sphärischen Erhebung 126b angeordnet ist, verschraubt. Mit ihrem Schraubenkopf 182b liegt die Befestigungsschraube 180b dabei auf der ersten axialen Fläche 174b der Befestigungsplatte 170b auf, die die Schraubenauflagefläche ausbildet. Dadurch ist das Führungselement 148b zu der Tischplatte 12b fixiert, kann aber zu dieser verdreht und parallel zu dem als Langloch ausgebildeten Durchgangsloch 160b zu der Tischplatte 12b verkippt werden.

Zur Anbindung des Drehgelenks 18b an die entsprechende Linearführung weist das Drehgelenk 18b ein Anbindungselement 184b auf. Das Anbindungselement 184b umfasst einen Flansch 186b. Mittels des Flansches 186b ist das Anbindungselement 184b fest und starr mit der entsprechenden Linearführung koppelbar. Das Anbindungselement 184b ist dazu vorgesehen, mit dem Führungselement 148b verbunden zu werden. Zur Anbindung an das Führungselement 148b weist das Anbindungselement 184b eine Aufnahme 188b auf. Die Aufnahme 188b umfasst eine kreisrunde Erhebung 190b. Die kreisrunde Erhebung 190b ist dazu vorgesehen, in das erste axiale Ende 150b des Führungselements 148b einzugreifen. Zur Anbindung des Anbindungselements 184b an das Führungselements 148b mittels einer Schraubenverbindung weist die Aufnahme 188b des Anbindungselements 184b zwei Sacklöcher 192b, 194b auf, die korrespondierend zu den Gewindelöchern 152b, 154b an dem ersten axialen Ende 150b des Führungselements 148b angeordnet sind. In einem montierten Zustand sind Befestigungsschrauben 196b, 198b durch die Sacklöcher 192b, 194b der Aufnahme 188b geführt und in den Gewindelöchern 152b, 154b an dem ersten axialen Ende 150b des Führungselements 148b eingeschraubt. Dadurch ist das Führungselement 148b drehfest mit dem Anbindungselement 184b gekoppelt.

Zur Erzeugung einer Verkippung der Tischplatte 12b während einer Verschwenkung weist das Drehgelenk 18b einen Verstellring 200b auf. Der Verstellring 200b ist ringförmig ausgebildet und weist einen Innendurchmesser auf, der größer ist als ein Außendurchmesser des Führungselements 148b. Das Führungselement 148b ist in einem montierten Zustand innerhalb des Verstellrings 200b angeordnet. Der Verstellring 200b umfasst einen Anbindungsbock 202b. Der Anbindungsbock 202b weist ein Gewindeloch 210b auf. Zur Anbindung des Verstellrings 200b an die Tischplatte 12b weist das Drehgelenk 18b eine Verstellschraube 204b auf. Die Verstellschraube 204b weist ein Gewinde auf, mit dem sie in einem montierten Zustand in das Gewindeloch 210b des Anbindungsbocks 202b eingeschraubt ist. An einem ersten Ende weist die Verstellschraube 204b ein Formschlusselement 206b auf. Das Formschlusselement 206b bildet eine konkave Endfläche 208b aus, mit der die Verstellschraube 204b in einem montierten Zustand an dem Boden 138b des Aufnahmelochs 136b des Anbindungsflanschs 130b an der Unterseite 62b der Tischplatte 12b anliegt. Die Verstellschraube 204b ist in montiertem Zustand mit ihrem Formschlusselement 206b in dem Aufnahmeloch 136b des Anbindungsflanschs 130b fixiert. Dazu ist die Verstellschraube 204b durch das Aufnahmeloch 136b der Verschlussplatte 140b geführt, die mit dem Anbindungsflansch 130b verschraubt ist. Dadurch ist die Verstellschraube 204b von der Verschlussplatte 140b in dem Aufnahmeloch 136b des Anbindungsflanschs 130b formschlüssig fixiert. Je nachdem, wie weit die Verstellschraube 204b in das Gewindeloch 210b des Anbindungsbocks 202b des Verstellrings 200b eingeschraubt ist, kann ein Abstand des Verstellrings 200b zu der Unterseite 62b der Tischplatte 12b variiert werden. Je weiter die Verstellschraube 204b in das Gewindeloch 210b des Anbindungsbocks 202b des Verstellrings 200b eingeschraubt ist, desto größer ist ein Abstand des Verstellrings 200b zu der Unterseite 62b der Tischplatte 12b. Der Verstellring 200b ist über den Anbindungsbock 202b, die Verstellschraube 204b und den Anbindungsflansch 130b an der Unterseite 62b der Tischplatte 12b drehfest zu der Tischplatte 12b fixiert. Der Verstellring 200b ist dazu vorgesehen, über eine der Führungskurven 162b, 168b des Führungselements 148b gekoppelt zu werden. Soll die Tischplatte 12b um 3 Grad verstellt werden, wird der Verstellring 200b mit der Führungskurve 162b zur 3-Grad-Verstellung gekoppelt. Soll die Tischplatte 12b um 2 Grad verstellt werden, wird der Verstellring 200b mit der Führungskurve 168b zur 2-Grad-Verstellung gekoppelt. Zur Kopplung mit dem Führungselement 148b weist der Verstellring 200b ein erstes Gewindeloch 212b und ein zweites Gewindeloch 214b auf. Das erste Gewindeloch 212b ist für eine Kopplung des Verstellrings 200b mit der Führungskurve 162 zur 3-Grad-Verstellung vorgesehen. Das zweite Gewindeloch 214b ist für eine Kopplung des Verstellrings 200b mit der Führungskurve 168b zur 2-Grad-Verstellung vorgesehen. Die Gewindelöcher 212b, 214b sind dementsprechend in den Verstellring 200b eingebracht. Zur Kopplung des Verstellrings 200b mit dem Führungselement 148b weist das Drehgelenk 18b ein Gewindestiftelement 216b auf. Soll die Tischplatte 12b um 3 Grad verstellt werden, wird das Gewindestiftelement 216b in das entsprechende Gewindeloch 212b eingeschraubt und greift mit einem Ende formschlüssig in die entsprechende Führungskurve 162b zur 3-Grad-Verstellung ein. Soll die Tischplatte 12b um 2 Grad verstellt werden, wird das Gewindestiftelement 216b in das entsprechende Gewindeloch 214b eingeschraubt und greift mit einem Ende formschlüssig in die entsprechende Führungskurve 168b zur 2-Grad-Verstellung ein. Bei einer Rotation des Drehgelenks 18b verschiebt sich das Gewindestiftelement 216b in der entsprechenden Führungskurve 162b, 168b, in die es eingreift. Durch die schräge Ausrichtung der Führungskurven 162b, 168b wird das Führungselement 148b zu der Tischplatte 12b verkippt. Da das Führungselement 148b über das Anbindungselement 184b und die entsprechende Linearführung an die Konsole angebunden ist, die in einer Ebene parallel zu der Aufständerebene fixiert sind, wird durch die Verkippung des Führungselements 148b zu der Tischplatte 12b die Tischplatte 12b zu der Aufständerebene verkippt.

Die Elemente des Drehgelenks 18b sind dabei aus einem Aluminium gebildet. Grundsätzlich ist es auch denkbar, dass die Elemente des Drehgelenks 18b aus einem anderen, dem Fachmann als sinnvoll erscheinenden Material, wie beispielsweise einem Kunststoff oder einem anderen Metall, gebildet sind. Dabei ist es denkbar, dass die Gewinde in dem Drehgelenk 18b jeweils durch Gewindeeinsätze ausgebildet werden. Kontaktflächen des Drehgelenks 18b, wie beispielsweise die sphärische Erhebung 126b und die konkave axiale Wandung 158b des Führungselements 148b, können gehärtet ausgebildet sein. Dabei ist es beispielsweise denkbar, dass diese Elemente beschichtet oder anodisiert werden.

### Bezugszeichen

- 10: Tischvorrichtung
- 12: Tischplatte
- 14: Verstellvorrichtung
- 16: Ebene
- 18: Drehgelenk
- 20: Drehgelenk
- 22: Rotationsachse
- 24: Rotationsachse
- 26: Tischauflagefläche
- 28: hinteres Ende
- 30: erste Linearführung
- 32: zweite Linearführung
- 34: Konsole
- 36: Aufnahme
- 38: Drehgelenk
- 40: vorderes Ende
- 42: Abschrägung
- 44: erste Seite
- 46: zweite Seite
- 48: Rotationsachse
- 50: erstes Anbindungselement
- 52: zweites Anbindungselement
- 54: erstes Anbindungselement
- 56: zweites Anbindungselement
- 58: erstes Anbindungselement
- 60: zweites Anbindungselement
- 62: Unterseite
- 64: Aufnahme
- 66: Aufnahme
- 68: erstes Führungselement
- 70: zweites Führungselement
- 72: erstes Führungselement
- 74: zweites Führungselement
- 76: erste Seite
- 78: Begrenzungsvorrichtung
- 80: Nut
- 82: Stift
- 84: zweite Seite
- 86: Aufnahme
- 88: Verriegelungsmechanismus
- 90: Verriegelungsstift
- 92: Verriegelungsmechanik
- 94: Verriegelungshaken
- 96: Betätigungselement
- 98: Hebelarm
- 100: Federelement
- 102: Formschlusselement
- 104: Anbindungsarm
- 106: Anbindungsarm
- 108: Öffnung
- 110: Schwenkachse
- 112: Stift
- 114: Durchgangsloch
- 116: Stift
- 118: Langloch
- 120: Durchgangsloch
- 122: Durchgangsloch
- 124: Abdeckplatte
- 126: Erhebung
- 128: Gewindeloch
- 130: Anbindungsflansch
- 132: Gewindeloch
- 134: Gewindeloch
- 136: Aufnahmeloch
- 138: Boden
- 140: Verschlussplatte
- 142: Sackloch
- 144: Sackloch
- 146: Durchgangsloch
- 148: Führungselement
- 150: erstes axiales Ende
- 152: Gewindeloch
- 154: Gewindeloch
- 156: zweites axiales Ende
- 158: konkave Wandung
- 160: Durchgangsloch
- 162: Führungskurve
- 164: radiale Wandung
- 166: axiale Wandung
- 168: Führungskurve
- 170: Befestigungsplatte
- 172: Durchgangsloch
- 174: Fläche
- 176: zweite axiale Fläche
- 180: Befestigungsschraube
- 182: Schraubenkopf
- 184: Anbindungselement
- 186: Flansch
- 188: Aufnahme
- 190: Erhebung
- 192: Sackloch
- 194: Sackloch
- 196: Befestigungsschraube
- 198: Befestigungsschraube
- 200: Verstellring
- 202: Anbindungsbock
- 204: Verstellschraube
- 206: Formschlusselement
- 208: Endfläche
- 210: Gewindeloch
- 212: Gewindeloch (Verstellring)
- 214: Gewindeloch (Verstellring)
- 216: Gewindestiftelement

## Patentansprüche

1. Flugzeugsitzvorrichtung mit zumindest einer Tischvorrichtung (10a; 10b), die zumindest eine Tischplatte (12a; 12b) umfasst, und mit zumindest einer Verstellvorrichtung (14a; 14b), die dazu vorgesehen ist, die Tischplatte (12a; 12b) zwischen einer Verstaustellung und einer Gebrauchsstellung zu verstellen, wobei die Verstellvorrichtung (14a; 14b) dazu vorgesehen ist, die Tischplatte (12a; 12b) bei einer Verstellung zwischen der Verstaustellung und der Gebrauchsstellung in einer linearen Verschiebebewegung und einer Rotationsbewegung zumindest im Wesentlichen in einer Ebene (16a) zu bewegen, **dadurch gekennzeichnet, dass** die Verstellvorrichtung (14a; 14b) zur Ausführung der linearen Verschiebebewegung zumindest zwei Linearführungen (30a, 32a) aufweist, und zur Ausführung der Rotationsbewegung zumindest zwei Drehgelenke (18a, 20a; 18b) umfasst, die unterschiedliche Rotationsachsen (22a, 24a) ausbilden.

2. Flugzeugsitzvorrichtung nach Anspruch 1, **dadurch gekennzeichnet, dass** die lineare Verschiebebewegung und die Rotationsbewegung unabhängig voneinander sind.

3. Flugzeugsitzvorrichtung nach Anspruch 1 oder 2, **dadurch gekennzeichnet, dass** die lineare Verschiebebewegung und die Rotationsbewegung zumindest teilweise aufeinanderfolgend ausgebildet sind.

4. Flugzeugsitzvorrichtung zumindest nach Anspruch 1, **dadurch gekennzeichnet, dass** das erste Drehgelenk (18a; 18b) und das zweite Drehgelenk (20a) unterhalb einer Tischauflagefläche (26a; 26b) angeordnet und mit der Tischplatte (12a; 12b) verbunden sind.

5. Flugzeugsitzvorrichtung nach Anspruch 1 oder 4, **dadurch gekennzeichnet, dass** die beiden mit der Tischplatte (12a; 12b) verbundenen Drehgelenke (18a, 20a; 18b) an einem hinteren Ende (28a; 28b) der Tischplatte (12; 12b) angeordnet sind.

6. Flugzeugsitzvorrichtung nach Anspruch 1, **dadurch gekennzeichnet, dass** die zumindest zwei Linearführungen (30a, 32a) als Gleitführungen ausgebildet sind.

7. Flugzeugsitzvorrichtung nach Anspruch 1 oder 6, **dadurch gekennzeichnet, dass** die zumindest zwei Linearführungen (30a, 32a) zueinander verschwenkbar angeordnet sind.

8. Flugzeugsitzvorrichtung nach Anspruch 1, **gekennzeichnet durch** eine Konsole (34a), die zumindest eine Aufnahme (36a) für die Tischvorrichtung (10a) umfasst, in der die erste Linearführung (30a) fest angebunden ist.

9. Flugzeugsitzvorrichtung nach Anspruch 1 **dadurch gekennzeichnet, dass** das erste Drehgelenk (18a) die fest in der Aufnahme angebundene Linearführung (30a) mit der Tischplatte (12a) koppelt.

10. Flugzeugsitzvorrichtung zumindest nach Anspruch 1 und 8, **dadurch gekennzeichnet, dass** das erste Drehgelenk (18a), welches die fest in der Aufnahme (36a) angebundene erste Linearführung (30a) mit der Tischplatte (12a) koppelt, auf einen Maximalschwenkwinkel begrenzt ist.

11. Flugzeugsitzvorrichtung zumindest nach Anspruch 8, **dadurch gekennzeichnet, dass** die Verstellvorrichtung (14a) ein drittes Drehgelenk (38a) aufweist, das die zweite Linearführung (32a) drehbar zu der Konsole (34a) lagert.

12. Flugzeugsitzvorrichtung nach Anspruch 1 **dadurch gekennzeichnet, dass** das zweite Drehgelenk (20a) die Tischplatte (12a) mit der zweiten Linearführung (32a) koppelt.

13. Flugzeugsitzbereich mit einer Flugzeugsitzvorrichtung nach einem der vorhergehenden Ansprüche.

## Claims

1. Aircraft seat device having at least one table device (10a; 10b) comprising at least one table plate (12a; 12b), and having at least one adjustment device (14a; 14b) which is configured to adjust the table plate (12a; 12b), between a stowage position and a use position, wherein the adjustment device (14a; 14b) is configured to move the table plate (12a; 12b), in an adjustment between the stowage position and the use position, in a linear translational movement and a rotational movement at least substantially in one plane (16a), **characterised in that** the adjustment device (14a; 14b) comprises at least two linear guidances (30a, 32a) to carry out the linear translational movement and comprises at least two pivot joints (18a, 20a; 18b), implementing different rotational axes (22a, 24a), to carry out the rotational movement.

2. Aircraft seat device according to claim 1, **characterised in that** the linear translational movement and the rotational movement are independent from each other.

3. Aircraft seat device according to claim 1 or 2, **characterised in that** the linear translational movement and the rotational movement are implemented at least partly in a successive fashion.

4. Aircraft seat device at least according to claim 1, **characterised in that** the first pivot joint (18a; 18b) and the second pivot joint (20a) are arranged underneath a table top surface (26a; 26b) and are connected to the table plate (12a; 12b).

5. Aircraft seat device according to claim 1 or 4, **characterised in that** the two pivot joints (18a, 20a; 18b), which are connected to the table plate (12a; 12b), are arranged at a rear end (28a; 28b) of the table plate (12a; 12b).

6. Aircraft seat device according to claim 1, **characterised in that** the at least two linear guidances (30a, 32a) are embodied as gliding guidances.

7. Aircraft seat device according to claim 1 or 6, **characterised in that** the at least two linear guidances (30a, 32a) are arranged in such a way that they are pivotable to each other.

8. Aircraft seat device according to claim 1, **characterised by** a console (34a) comprising at least one accommodation (36a) for the table device (10a), in which the first linear guidance (30a) is fixedly connected.

9. Aircraft seat device according to claim 1, **characterised in that** the first pivot joint (18a) couples the linear guidance (30a), which is fixedly connected in the accommodation, to the table plate (12a).

10. Aircraft seat device at least according to claims 1 and 8, **characterised in that** the first pivot joint (18a), which couples the first linear guidance (30a) that is fixedly connected in the accommodation (36a) to the table plate (12a), is restricted to a maximum pivot angle.

11. Aircraft seat device at least according to claim 8, **characterised in that** the adjustment device (14a) comprises a third pivot joint (38a), which supports the second linear guidance (32a) in such a way that it is rotatable with respect to the console (34a).

12. Aircraft seat device according to claim 1, **characterised in that** the second pivot joint (20a) couples the table plate (12a) to the second linear guidance (32a).

13. Aircraft seating area with an aircraft seat device according to one of the preceding claims.

## Revendications

1. Dispositif siège d'avion avec au moins un dispositif de table (10a ; 10b) comprenant au moins un dessus de table (12a ; 12b), et avec au moins un dispositif à ajustement (14a ; 14b) prévu à ajuster le dessus de table (12a ; 12b) entre une position de rangement et une position d'usage, le dispositif à ajustement (14a ; 14b) étant prévu, dans un ajustement entre la position de rangement et la position d'usage, à mouvoir le dessus de table (12a ; 12b) dans un mouvement translationnel linéaire et un mouvement rotatif au moins sensiblement dans un plane (16a), **caractérisé en ce que** le dispositif à ajustement (14a ; 14b) comporte au moins deux guidages linéaires (30a, 32a) pour exécuter le mouvement translationnel linéaire et comporte au moins deux joints pivotants (18a, 20a ; 18b), formant des axes rotatifs (22a, 24a) différents, pour exécuter le mouvement rotatif.

2. Dispositif siège d'avion selon la revendication 1, **caractérisé en ce que** le mouvement translationnel linéaire et le mouvement rotatif sont indépendants l'un de l'autre.

3. Dispositif siège d'avion selon la revendication 1 ou 2, **caractérisé en ce que** le mouvement translationnel linéaire et le mouvement rotatif sont implémentés au moins partiellement de telle manière qu'ils font suite l'un à l'autre.

4. Dispositif siège d'avion au moins selon la revendication 1, **caractérisé en ce que** le premier joint pivotant (18a ; 18b) et le deuxième joint pivotant (20a) sont disposés au-dessous d'une surface sus-jacente de table (26a ; 26b) et sont raccordés avec le dessus de table (12a ; 12b).

5. Dispositif siège d'avion selon la revendication 1 ou 4, **caractérisé en ce que** les deux joints pivotants (18a, 20a ; 18b) raccordés avec le dessus de table (12a ; 12b) sont disposés à une extrémité derrière (28a ; 28b) du dessus de table (12a ; 12b).

6. Dispositif siège d'avion selon la revendication 1, **caractérisé en ce que** les au moins deux guidages linéaires (30a, 32a) sont implémentés comme guidages glissants.

7. Dispositif siège d'avion selon la revendication 1 ou 6, **caractérisé en ce que** les au moins deux guidages linéaires (30a, 32a) sont disposés de telle manière qu'ils sont pivotables l'un par rapport à l'autre.

8. Dispositif siège d'avion selon la revendication 1, **caractérisé par** une console (34a) comportant au moins un réceptacle (36a) pour le dispositif de table (10a), dans lequel le premier guidage linéaire (30a) est raccroché fixement.

9. Dispositif siège d'avion selon la revendication 1, **caractérisé en ce que** le premier joint pivotant (18a) couple le guidage linéaire (30a), lequel est fixement raccroché dans le réceptacle (36a), avec le dessus de table (12a).

10. Dispositif siège d'avion au moins selon les revendications 1 et 8, **caractérisé en ce que** le premier joint pivotant (18a), lequel couple le premier guidage linéaire (30a) fixement raccroché dans le réceptacle (36a) avec le dessus de table (12a), est restreint à un angle pivotant maximal.

11. Dispositif siège d'avion au moins selon la revendication 8, **caractérisé en ce que** le dispositif à ajustement (14a) comporte un troisième joint pivotant (38a) supportant le deuxième guidage linéaire (32a) de telle manière qu'il est pivotable relativement à la console (34a).

12. Dispositif siège d'avion selon la revendication 1, **caractérisé en ce que** le deuxième joint pivotant (20a) couple le dessus de table (12a) avec le deuxième guidage linéaire (32a).

13. Une zone de places assises d'avion avec un dispositif siège d'avion selon l'une quelconque des revendications précédentes.
